(19) Europäisches Patentamt

European Patent Office

Office européen des brevets

(11) **EP 1 251 385 A1**

(12) **EUROPEAN PATENT APPLICATION**

(43) Date of publication:
**23.10.2002 Bulletin 2002/43**

(51) Int Cl.⁷: **G02B 26/02**, G02B 6/12

(21) Application number: **01400993.0**

(22) Date of filing: **18.04.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Corning Incorporated**
**Corning, New York 14831 (US)**

(72) Inventors:
• **Dahmani, Brahim**
**92120 Montrouge (FR)**
• **Fondeur, Barthélémy**
**77210 Avon (FR)**

(74) Representative: **Orian, Yvette Suzanne et al**
**Cabinet Beau de Loménie**
**158, rue de l'Université**
**75340 Paris Cédex 07 (FR)**

(54) **Optical-power coupling devices**

(57) A variety of optical-power coupling devices can be produced by associating an integrated optical circuit with a micro electro-mechanical system (MEMS) incorporating a rotatable mirror (5). The integrated optical circuit substrate (1) has input and output waveguides (WG) converging towards an edge (E) thereof and the mirror substrate (2) bearing the MEMS is arranged so that the axis of rotation (7) of the mirror portion (5) is substantially perpendicular to this edge (E). Rotation of the mirror portion (5) changes the amount of optical power coupled between the waveguides (WG). this arrangement can be used to implement optical devices including switches, attenuators, equalisers and limiters.

FIG.1C

**Description**

Background of the Invention

Field of the Invention

The present invention relates to the field of optical-power coupling devices, notably including optical switches and optical-power control devices such as optical attenuators, limiters, equalisers, etc.

Technical Background

It is often desired to implement optical power coupling devices, such as switches, attenuators, etc., in integrated optical circuits. This is usually achieved using an interferometer and applying thermal effects and/or index modulation to cause a desired degree of constructive or destructive interference at the output of the interferometer. However, when using this approach it is difficult to obtain a flat frequency response, and different transmission characteristics are exhibited when the light has different types of polarisation.

It could be envisaged to produce an optical switch for an integrated optical circuit, for example, using a micro-electro- mechanical system (MEMS). However, such an approach is difficult in integrated optics since the optical waveguides concerned are located in a plane close to the surface of the substrate and it would be necessary to move a switching element in this plane. It could be expected that an expensive, custom-built MEMS would be required. Moreover, there are difficulties involved when it is necessary to align, with great precision, components manufactured of different materials and using different technologies (micro-mechanics and micro-optics).

Summary of the Invention

The present invention provides an arrangement by which micro-mechanical and micro-optical components can be associated in order to produce different types of optical-power coupling devices, whilst reducing the need for precise alignment of the components manufactured according to the different technologies.

More particularly, the present invention provides an optical-power coupling device comprising: a first substrate having in a first plane thereof a first and a second waveguide, wherein the first and second waveguides are not in contact with each other but converge with each other towards a first edge of the first substrate; and a second substrate having a cavity defined therein, a minor portion, and an axis of rotation lying in a second plane, the axis of rotation passing through the mirror portion so that the mirror portion is rotatable about said axis, in said cavity, between at least a first position and a second position; wherein the second substrate is oriented such that the second plane of the second substrate is substantially perpendicular to the first plane of the first substrate and is positioned adjacent to the first edge of the first substrate such that when the mirror portion of the second substrate is in the first position a first percentage of light propagating in one of said first and second waveguides in use is coupled to the other of the first and second waveguides and, when the mirror portion of the second substrate is in the second position, a second percentage of light is coupled between said first and second waveguides, the first and second percentages being different from each other.

Optical power-coupling devices according to the invention have a geometry such that there is only a relatively low requirement for accuracy in alignment of the different components. More particularly, it is not critical if the first edge of the first substrate deviates to some extent from the desired position (which is perpendicular to the direction in which the waveguides converge towards the first edge). Furthermore, with this geometry, the main elements requiring precise alignment are the waveguides on the first substrate, rather than components made using different technologies. The desired alignment can be achieved with ease during the lithography steps used in the manufacture of the waveguides.

The invention can be used to implement a variety of optical-power coupling devices, for example, an attenuator, limiter or equaliser, by adapting the mirror portion of the second substrate so as to be rotatable to a selected position within a range of positions. The percentage of light coupled between the first and second waveguides depends upon the angular position of the mirror portion. A control device is provided to control the rotational angle of the mirror portion of the second substrate dependent upon the desired amount of attenuation. In such an arrangement, a sensor can be provided to detect the optical power coupled between the first and second waveguides. The rotational-angle controlling means can then be adapted to control the rotational angle of the mirror portion of the second substrate based on a signal provided by the coupled optical-power sensor. This ensures that the amount of transmitted optical power can be controlled stably and accurately. Alternatively, the rotational-angle controlling means can operate based on a signal received from an optical sensor monitoring power transmitted to an output waveguide in a secondary set of waveguides arranged with the same relative angular disposition as the first and second waveguides. This alternative arrangement has the advantage that the optical power transmitted to the principal output waveguide is not affected.

The optical-power coupling device of the invention can be implemented as a switch by ensuring that substantially 100% of the optical power is coupled between the first and second waveguides when the mirror portion of the second substrate is in the first position and substantially 0% of the optical power is coupled between the first and second waveguides when the mirror portion of the second substrate is in the second position. If a third waveguide is provided in the first plane of the first substrate, with all three waveguides converging towards the first edge of the first substrate, the geometry can be set such that when the mirror portion of the second substrate is in the second position, substantially 100% of the optical power is directed towards the third waveguide. In other words, a 1 to 2 optical switch can be provided.

A linear array of 1 to 2 switches can be provided by providing further sets of converging waveguides on the first substrate and corresponding further mirror portions on the second substrate.

A two-dimensional array of 1 to 2 optical switches can be produced by arranging above or below the first substrate at least one further substrate having a third plane in which waveguides are disposed as in the first plane of the first substrate. Movement of the mirror portion of the second substrate then caused simultaneous switching in each of the pile of substrates (first and third).

Advantageously, in the power coupling devices according to the present invention the first substrate and any third substrates are lightwave optical circuits.

It is preferred that, in the optical-power coupling devices according to the invention the mirror portion of the second substrate is metallised at least on opposing sides of a major surface thereof facing the cavity, and in the cavity there are provided electrodes adapted selectively to apply an electrostatic charge at the opposing sides of the mirror portion so as to cause the mirror portion to rotate. The electrodes may be disposed on opposite sides of a pivot provided in the cavity and supporting the mirror portion at the apex thereof. A MEMS rotatable mirror of this kind has been proposed, in a different context, by Laboratoire d'Analyse et d'Architecture de Systèmes (LAAS).

Preferably the mirror portion of the second substrate is relatively small (typically having a width of the order of 20 µm in the direction substantially perpendicular to the axis of rotation) and is arranged close to the first substrate (the distance between the second substrate and the first substrate typically being of the order of 10 µm). In this way the optical power losses are kept low.

Further features and advantages of the present invention will become clear from the following description of preferred embodiments thereof, given by way of example, and illustrated by the accompanying drawings, in which:

Brief Description of the Drawings

Fig. 1 illustrates the geometry of optical-power coupling devices according to the preferred embodiments of the present invention, in which:

Fig.1A is a side view schematically illustrating the relative positions of first and second substrates in the optical-power coupling devices;
Fig.1B is a top view schematically illustrating the relative positions of the first and second substrates; and
Fig.1C is a partial, enlarged view illustrating schematically one example of the disposition of waveguides and a mirror portion provided on the first and second substrates, respectively;

Fig.2 illustrates components of a micro- electro-mechanical mirror system used in optical-power coupling devices according to the preferred embodiments of the invention, in which:

Fig.2A is an enlarged perspective view of a mirror portion; and
Fig.2B is an enlarged perspective view of a pivot portion;

Fig.3 is graph showing the optical-power transmission characteristic of an attenuator embodying the present invention;
Fig.4 schematically illustrates an alternative arrangement used for controlling the rotational angle in an attenuator embodying the present invention;
Fig.5 schematically illustrates a linear array of 1 to 2 switches according to one embodiment of the present invention; and
Fig.6 schematically represents a two-dimensional array of 1 to 2 switches according to one embodiment of the present invention.

Detailed Description of the Preferred Embodiments

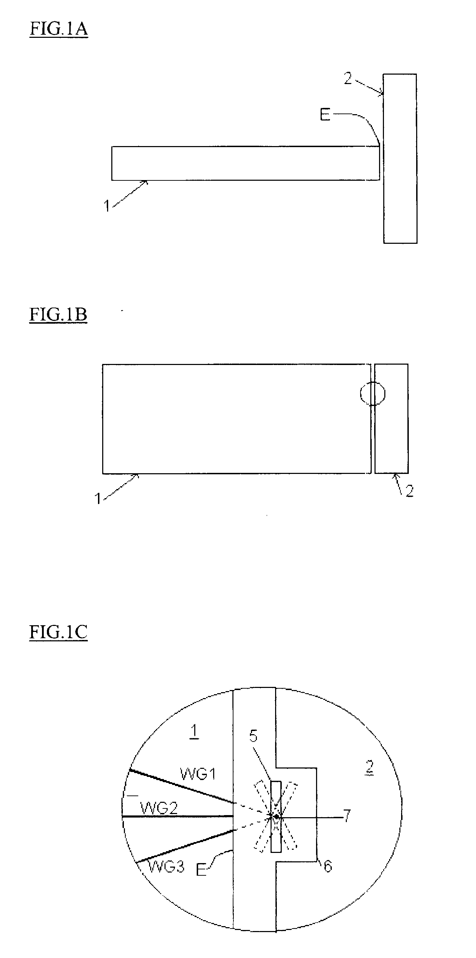

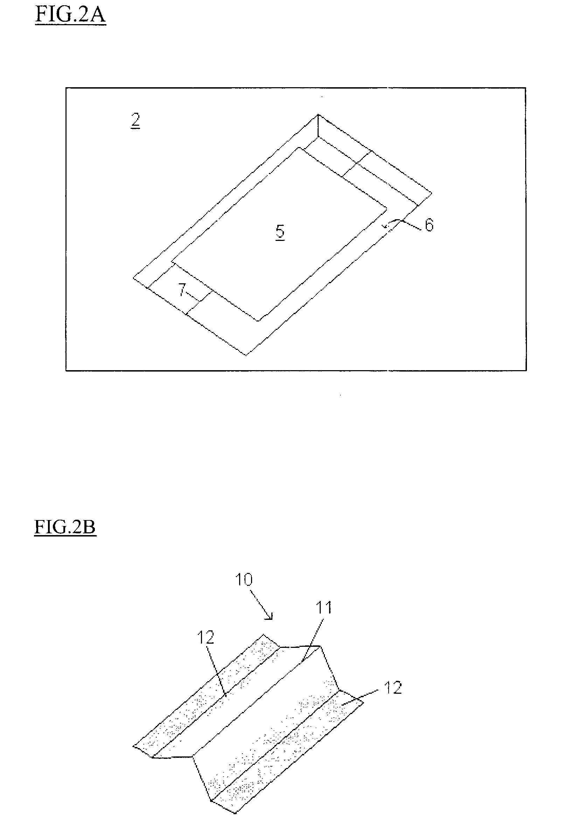

The preferred embodiments of optical-power coupling device according to the present invention share a basic geometry. This will now be described with reference to Figs.1A, 1B, 1C, 2A and 2B.

As seen from Figs.1A, 1B and 1C, the optical-power coupling devices of the present invention include a first substrate 1, preferably implemented as a lightwave optical circuit (LOC) substrate, and a mirror substrate 2 arranged close to an edge E of the first substrate 1. The LOC substrate 1 has a number of integrated waveguides WG in a first plane thereof at or near a major surface (the top surface, as shown in Fig.1A). The mirror substrate 2 comprises a micro- electro-mechanical (MEMS) system providing a rotatable mirror portion 5. Optical power losses can be kept low by keeping the mirror size small. For example, use of a mirror portion 5 that is 20 μm wide, and a gap of about 10 μm between the LOC substrate 1, and the mirror substrate 2, produces an optical path about 20 μm long outside the LOC substrate 1. The associated loss in optical power is around 0.1 dB.

Fig.1C corresponds to an enlarged, cut-away view of the portion circled in Fig.1B. As shown in Fig.1C, the LOC substrate 1 has at least two waveguides WG (here three waveguides WG1, WG2 and WG3) provided in a first plane thereof. The waveguides WG1 to WG3 converge as they approach the edge E of the first substrate 1 adjacent to the mirror substrate 2. The rotatable mirror portion 5 of the mirror substrate 2 rotates about an axis 7. The mirror substrate 2 is arranged so that the rotational axis 7 of the mirror portion 5 is substantially perpendicular to the plane of the LOC substrate 1 containing the waveguides WG1-3, and so that imaginary lines drawn as a continuation of the waveguides would intersect at a common point on the axis of rotation of the mirror portion 5 (see dashed lines in Fig.1C).

The angles of convergence of the waveguides WG1, WG2 and WG3 are chosen such that, as the mirror portion 5 of the mirror substrate 2 rotates, there is a change in the amount of light coupled between the waveguides. The way in which the optical-power coupling between the waveguides changes with the rotational angle of the mirror portion 5 depends upon the angular disposition of the waveguides with respect to each other. This, in turn, is set based upon the function that the optical-coupling device is to perform. The degree of optical-power coupling does not depend upon the frequency of light concerned nor upon the type of polarisation.

For example, consider the case where the arrangement illustrated in Fig.1C is applied in a 1 to 2 optical switch. If light is propagating in waveguide WG1 towards the edge E of the substrate 1 then, when the mirror portion 5 is held at an angle such that it is parallel to edge E of the LOC substrate 1, substantially all of the light propagating in waveguide WG1 is coupled to the waveguide WG3. However, the mirror portion 5 can be rotated clockwise from this position to an orientation such that substantially all of the light propagating in the waveguide WG1 is coupled to WG2, with substantially no optical power being coupled to WG3.

The desired angular disposition of the integrated waveguides relative to one another is achieved during manufacture of the LOC substrate, using standard manufacturing techniques in the field of integrated optics. More particularly, standard lithographic techniques enable the waveguides to be aligned with a suitable degree of precision. Further, in the case where multiple units of the LOC substrate are manufactured on a common wafer, and are then separated by dicing, some variation can be tolerated in the orientation of the dicing line.

The MEMS provided on the mirror substrate 2 used in the basic geometry described above, preferably takes the form illustrated in Figs.2A and 2B. More particularly, a cavity 6 is etched in the mirror substrate 2 so as to leave a portion 5 of the substrate surface which rotates about the axis 7 which is located in this surface. The underside of the mirror portion 5 (that is, the major surface of mirror portion 5 that faces the cavity 6), is metallised, at least towards the edges thereof. The mirror portion 5 rests on the apex 11 of a pivot 10, as shown in Fig.2B. At least the extremities of the pivot are metallised so as to constitute electrodes 12.

Rotation of the mirror portion 5 is caused by application of electrostatic forces. More especially, the mirror portion 5 will rotate clockwise if a voltage of a given polarity is applied to an electrode 12 on one side of the pivot, and will rotate anticlockwise if a voltage of the given polarity is applied to the electrode 12 on the other side of the pivot 10. This effect can be enhanced by simultaneously applying voltages of opposite polarities to electrodes 12 on both sides of the pivot 10 (such that one side of the mirror portion 5 experiences an attractive force whilst the other side experiences a repelling force). The degree of rotation achieved in either case depends upon the magnitude of the voltage(s) applied to the electrode(s) 12. Thus, the angular position of the mirror portion 5 is controlled by varying the magnitude and polarity of the voltages applied to the electrodes 12. In this arrangement, there are three well-defined positions of the mirror portion 5: the rest position of the mirror portion 5 parallel to the surface of the second substrate (when no electrostatic forces are applied), and the two, fully-rotated positions where the mirror portion 5 lies against the respective side surfaces of the pivot 10 (when electrostatic forces are applied to cause maximum rotation in one sense or the other).

As mentioned above, a MEMS suitable for use in the present invention has been proposed by LAAS, for use in controlling the pointing direction of a laser beam.

It will be seen that, in the optical-power coupling devices of the present invention, despite the fact that micro-mechanical components are associated with micro-optical components it is not necessary to take special measures to ensure precise alignment of the components made using the two different technologies. This is due, in part, to the fact that the mirror is large compared to the waveguides.

Moreover, the present invention has the advantage of making use of known manufacturing techniques and of components of known type. This reduces the costs of product development.

Application of the above-described basic geometry to a first embodiment of attenuator according to the present invention will now be described. In this case, two waveguides (for example, WG1 and WG3) on the LOC substrate 1 converge towards edge E, one (e.g. WG1) constituting the input waveguide and the other (e.g. WG3) constituting the output waveguide. The rotational position of the mirror portion 5 controls the degree of coupling (taking values from 1 to 0) of optical power from the input waveguide to the output waveguide according to the equation below:

$$\text{Coupling} = 4 \exp \frac{-2n^2\pi^2w^2[(\{2+(4D^2\lambda^2\div n^2\pi^2w^4)\}(\sin\theta)^2)+(2D\lambda\sin\theta\tan\theta\div n\pi w^2)+(2D^2\lambda^2(\tan\theta)^2\div n^2\pi^2w^4)]}{\lambda^2[4+(4D^2\lambda^2\div n^2\pi^2w^4)]}}{4+(4D^2\lambda^2\div n^2\pi^2w^4)}$$

where

n = refractive index of the medium (usually air) in the space between the LOC substrate 1 and the mirror substrate 2,
w = waist of the light beam,
D = distance from the mirror to the waveguide,
θ = mirror angle (a mirror angle of 0° corresponds to the position where the normal to the mirror portion 5 bisects the angle between the input and output waveguides and there is maximum coupling — for Fig.1C this corresponds to the position shown in solid lines), and
λ = wavelength of the light being transmitted.

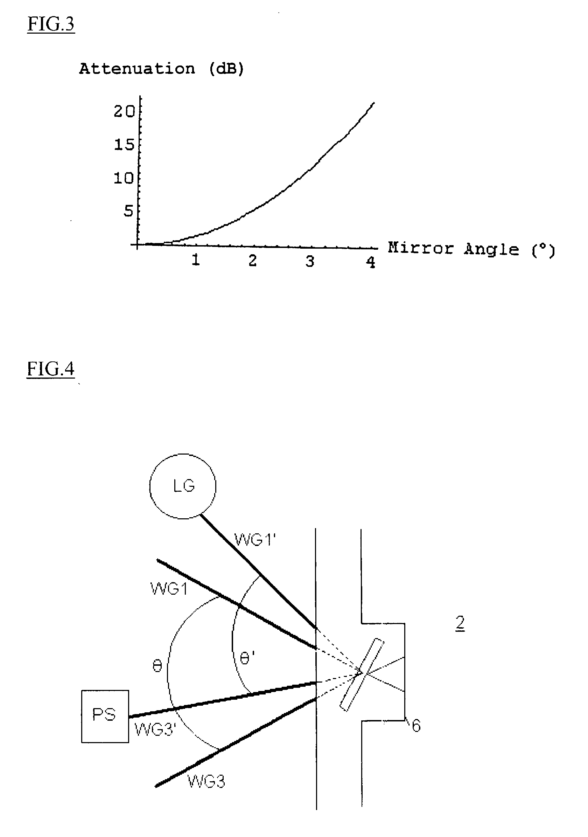

The relationship between the degree of coupling and the angular position of the mirror portion 5 is represented graphically in Fig.3.

In order to have precise control of the rotational position of the mirror portion 5, preferably, an optical power sensor (not shown) is arranged to monitor the transmitted optical power propagating in the output waveguide. A desired degree of attenuation is produced by controlling the angle of the mirror portion 5 dependent upon the signal output by this optical power sensor. Optical power sensors are well-known and so no further description thereof will be given here.

The above technique for controlling the rotational angle of the mirror portion 5 has the disadvantage that it withdraws a fraction of the energy propagating in the output waveguide. Fig.4 illustrates schematically an alternative arrangement that can be used for controlling the rotational angle of the mirror portion 5, without affecting the energy transmitted in the output waveguide.

As shown in Fig.4, in addition to the principal waveguides (here WG1 and WG3), a set of secondary waveguides WG1', WG3', an auxiliary light generator LG and an optical power sensor PS, are provided on the first substrate 1. The angle θ' between the secondary waveguides WG1', WG3' is the same as that θ between the principal waveguides WG1, WG3. Further, light is coupled between the first and second secondary waveguides WG1', WG3' by the same mirror portion 5 that couples light between the principal waveguides WG1, WG3. Imaginary lines drawn as a continuation of the waveguides WG1, WG3, WG1' and WG3' would intersect at a common point on the axis of rotation of the mirror portion 5.

Light is transmitted through one of the secondary waveguides and coupled, via mirror portion 5, to the other secondary waveguide. Preferably, to avoid interference problems, the wavelength of light generated by the auxiliary light generator LG and transmitted in the secondary waveguides is different from the wavelength transmitted in the principal waveguides. The optical power sensor PS is used to measure the optical power transmitted to the output secondary waveguide. Because the optical power transmitted in the input secondary waveguide is known, the measured signal indicates the degree of coupling between the input and output secondary waveguides WG1', WG3' and, thus, the rotational angle of the mirror portion 5. Because the relative angular positions of the secondary waveguides are the same as those of the principal waveguides, the thus-determined angular position of the mirror portion 5 is valid not just with respect to the secondary waveguides but also with respect to the principal waveguides WG1, WG3.

The same arrangements can be used to implement all kinds of standard power control functions, notably the functions of an equaliser and limiter. For example, in the case of a limiter, the angle of the mirror portion 5 is controlled so as to maintain the value of the optical power transmitted in the output waveguide at or below a reference value.

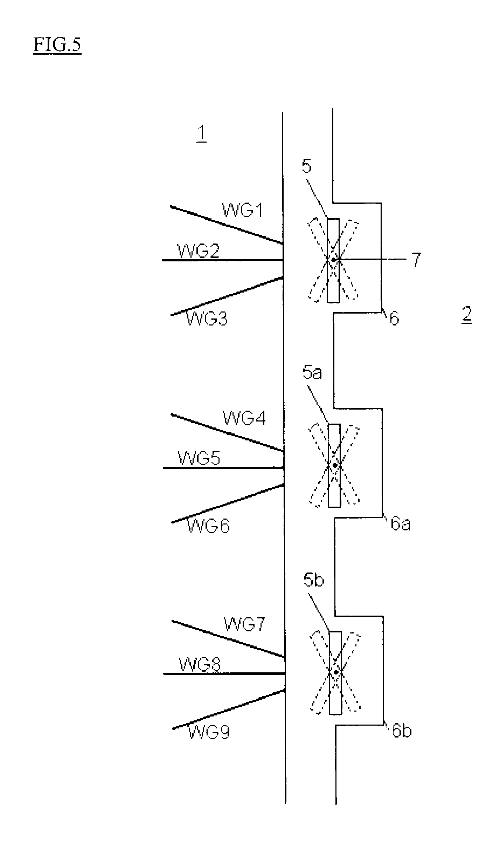

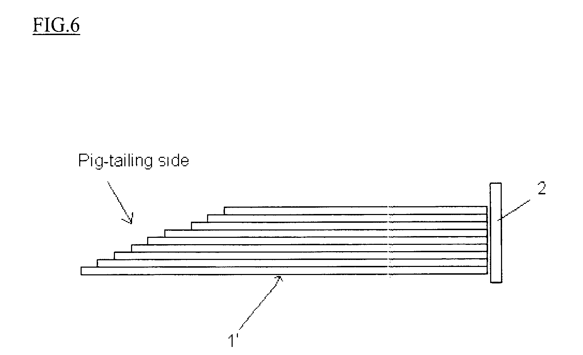

The basic geometry described above can also be used to implement different types of optical switching functions. The example of an optical 1 to 2 switch has already been described above. It is also a simple matter to use the basic geometry to produce other switching arrangements, such as a linear array of 1 to 2 switches or a two-dimensional array of 1 to 2 switches. The case of a linear array of 1 to 2 switches is illustrated in Fig.5, the case of a two-dimensional array of 1 to 2 switches is illustrated in Fig.6.

As shown in Fig.5, a linear array of 1 to 2 switches is created by defining a plurality of sets of waveguides WG1-WG3, WG4-6, WG7-9, etc. in a common substrate 1. The waveguides of each set have the same angular positions relative to one another and to the edge E as do the waveguides of all the other sets. A corresponding plurality of mirror portions 5, 5a, 5b, etc. is formed in the mirror substrate 2. A common control signal can be applied to each of the mirror portions, to control the rotational position thereof, so that each of the 1 to 2 switches is operated simultaneously with the others. Alternatively, some or all of the switches can be controlled independently by applying separate control signals to the respective minor portions.

As shown in Fig.6, the two-dimensional array of switches is created by piling up LOC substrates 1' all having input and output waveguides WG1-WG3 arranged in the same positions relative to one another and to the substrate edge E. A common mirror portion 5 on the mirror substrate 2 can then be used simultaneously to operate the arrayed switches. Alternatively, a set of mirror portions 5 provided on a common mirror substrate can be used to control switching in the array, in which case the layout of input and output waveguides on the different LOC substrates need not be identical. A large number of switches can be accommodated in arrays of this type. The pigtailing of the component is easy because the input and output are on the same side. Moreover a single command line can be used to control switching of all elements in the array (ribbon to ribbon switching). Thus, a two-dimensional array of this type can provide low-cost switching of a large number of optical fibers.

While the invention has been particularly illustrated and described with reference to preferred embodiments thereof, it will be understood by those skilled in the art that the above-mentioned and other alterations may be made without departing from the scope of the invention as defined in the accompanying claims.

For example, the arrangement used to displace the mirror portion 5 can be varied. Moreover, although integrated optical waveguides are used as the input and output waveguides of the optical-power coupling devices described above, these could be coupled to conventional optical fibres.

Furthermore, the above-described arrangements for controlling the rotational angle of a mirror portion 5 in an attenuator or the like, could also be used in switch devices (including the linear and two-dimensional arrays of 1 to 2 switches). Still further, in the above-described alternative arrangement for controlling the rotational angle of the mirror portion 5, the coupling between the secondary waveguides WG1', WG3' could be achieved using a mirror portion 5' different from that used to couple the principal waveguides WG1, WG3, but provided on the mirror substrate 2 so as to have the same construction, the same basic orientation, and controlled by the same control signals as the mirror portion 5.

Moreover, although in the above-described embodiment of a two-dimensional array of 1 to 2 switches, the layout of waveguides was the same on each of the pile of LOC substrates, it is possible to envisage a case where switching functions in two dimensions could be realised using a pile of LOC substrates in which the layout of waveguides is different on certain or all of the LOC substrates.

Furthermore, in embodiments of the present invention that make use of secondary waveguides (e.g. WG1', WG3') for evaluation and control of the position of the mirror portion(s), these secondary waveguides can be on a substrate separate from the substrate bearing the principal waveguides (e.g. WG1, WG3). In such a case, the layout of secondary waveguides on their substrate can be identical to the layout of the corresponding principal waveguides on their substrate.

## Claims

1. An optical-power coupling device comprising:

   a first substrate (1) having in a first plane thereof a first (WG1) and a second (WG3) waveguide, wherein the first and second waveguides are not in contact with each other but converge with each other towards a first edge (E) of the first substrate; and
   a second substrate (2) having a cavity (6) defined therein, a mirror portion (5), and an axis of rotation (7) lying in a second plane, the axis of rotation passing through the mirror portion (5) so that the mirror portion is rotatable about said axis (7), in said cavity (6), between at least a first position and a second position;

   wherein the second substrate (2) is oriented such that the second plane of the second substrate is substantially perpendicular to the first plane of the first substrate (1) and is positioned adjacent to the first edge (E) of the first substrate such that when the mirror portion (5) of the second substrate is in the first position a first percentage of light propagating in one of said first and second waveguides in use is coupled to the other of the first and second waveguides and, when the mirror portion of the second substrate is in the second position, a second percentage of light is coupled between said first and second waveguides, the first and second percentages being different from each other.

2. The optical-power coupling device of claim 1, wherein the mirror portion (5) of said second substrate (2) is adapted to be rotatable to a selected position within a range of positions including said first and second positions, the percentage of the light coupled between said first and second waveguides (WG1,WG3) in use depending upon the angular position adopted by said mirror portion (5), and the optical-power coupling device comprises means for controlling the rotational angle of the mirror portion (5) of the second substrate (2) dependent upon a desired amount of attenuation.

3. The optical-power coupling device according to claim 2, and comprising a sensor of the optical power coupled between the first and second waveguides (WG1,WG3), wherein the rotational-angle controlling means is adapted to control the rotational angle of the mirror portion (5) of the second substrate based on a signal provided by the coupled optical-power sensor.

4. The optical-power coupling device according to claim 2, and comprising: first and second secondary waveguides (WG1',WG3') provided on the first substrate (1), the angular positions of the secondary waveguides (WG1',WG3') relative to each other and to the first edge (E) being the same as those of the first and second waveguides (WG1,WG3); and a sensor (PS) of the optical power coupled between the first and second secondary waveguides (WG1',WG3') in use; wherein the rotational-angle controlling means is adapted to control the rotational angle of the mirror portion (5) based on a signal provided by the coupled optical power sensor (PS).

5. The optical-power coupling device according to claim 3 or 4, configured as an equaliser.

6. The optical-power coupling device according to claim 3 or 4, configured as a limiter.

7. The optical-power coupling device according to any one of claims 1 to 4, wherein the first percentage of light coupled between the first and second waveguides (WG1,WG3) when the mirror portion (5) of the second substrate (2) is in the first position is substantially 100% and the second percentage of light coupled between the first and second waveguides (WG1,WG3) when the mirror portion (5) of the second substrate (2) is in the second position is substantially 0%, whereby to provide an optical switching function.

8. The optical-power coupling device according to claim 7, and comprising a third waveguide (WG2) provided in said first plane of the first substrate (1), the third waveguide (WG2) not being in contact with the first and second waveguides (WG1,WG3) but converging therewith towards the first edge (E) of the first substrate; wherein when the mirror portion (5) of the second substrate (2) is in said second position, substantially 100% of the light propagating in said one of the first and second waveguides (WG1,WG3) in use is coupled to the third waveguide (WG2), whereby to provide a 1 to 2 optical switching function.

9. The optical-power coupling device according to claim 8, and comprising: at least one further set of first to third waveguides (WG4-6;WG7-9) and, on the second substrate (2), a corresponding further mirror portion (5a,5b) for each of said at least one further set of waveguides; wherein the waveguides in the or each further set have the same angular positions relative to one another and to the first edge (E) of the first substrate (1) as have the first to third waveguides (WG1-3), and the further mirror portions (5a,5b) have the same orientation as said mirror portion (5); whereby to constitute a linear array of 1 to 2 optical switches.

10. The optical-power coupling device according to claim 8 or 9, and comprising at least one third substrate (1') having a first edge and a third plane, wherein the or each third substrate (1') has in the third plane thereof the same number and disposition of waveguides as in the first plane of said first substrate, wherein the at least one third substrate (1') is superposed on the first substrate such that the third plane of the third substrate(s) is substantially parallel to the first plane of the first substrate (1) and the first edge of the third substrate(s) is substantially aligned with the first edge (E) of the first substrate, whereby to constitute a two-dimensional array of 1 to 2 optical switches.

11. The optical-power coupling device according to any previous claim, wherein the first substrate (1) and any third substrates (1') are lightwave optical circuits.

**12.** The optical-power coupling device according to any previous claim, wherein the mirror portion (5) of the second substrate (2) is metallised at least on opposing sides of a major surface thereof facing the cavity (6), and in the cavity (6) there are provided electrodes (12) adapted selectively to apply an electrostatic charge at said opposing sides of the mirror portion (5), whereby to cause the mirror portion to rotate.

**13.** The optical-power coupling device according to claim 12, wherein a pivot (10) is provided in the cavity of the second substrate (2), supporting the mirror portion (5) substantially at the midpoint of the width thereof, and the electrodes (12) are provided on first and second sides of the pivot (10).

**14.** The optical-power coupling device according to any previous claim, wherein the mirror portion (5) of the second substrate (2) has a width of the order of 20 μm in the direction substantially perpendicular to the axis of rotation (7) and the distance between the second substrate (2) and the first substrate (1) is of the order of 10 μm.

## FIG.1A

## FIG.1B

## FIG.1C

FIG.2A

FIG.2B

FIG.3

Attenuation (dB) vs Mirror Angle (°)

FIG.4

FIG.5

## FIG.6

Pig-tailing side

1'

2

# EP 1 251 385 A1

**European Patent Office**

## EUROPEAN SEARCH REPORT

Application Number

EP 01 40 0993

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 296 18 818 U (CMS MIKROSYSTEME GMBH CHEMNITZ) 12 December 1996 (1996-12-12) | 1 | G02B26/02 G02B6/12 |
| A | * page 5, paragraph 2 - paragraph 4 *<br>* page 6 *<br>* page 7, paragraph 1 - paragraph 3 *<br>* figures 1,2 * | 2-14 | |
| X | EP 0 550 017 A (TEXAS INSTRUMENTS INC) 7 July 1993 (1993-07-07) | 1 | |
| A | * page 4, line 28 - line 39 *<br>* figures 1-5 * | 2-14 | |
| X | US 6 031 946 A (BISHOP DAVID JOHN ET AL) 29 February 2000 (2000-02-29) | 1 | |
| A | * abstract; figures * | 2-14 | |
| X | EP 0 420 468 A (HAZELTINE CORP) 3 April 1991 (1991-04-03) | 1 | |
| A | * abstract; figures * | 2-14 | |
| X | PATENT ABSTRACTS OF JAPAN vol. 2000, no. 04, 31 August 2000 (2000-08-31) -& JP 2000 019434 A (NIPPON SIGNAL CO LTD:THE), 21 January 2000 (2000-01-21) | 1 | TECHNICAL FIELDS SEARCHED (Int.Cl.7)<br><br>G02B |
| A | * abstract; figures * | 2-14 | |
| X | PATENT ABSTRACTS OF JAPAN vol. 011, no. 216 (P-595), 14 July 1987 (1987-07-14) -& JP 62 035322 A (CANON INC), 16 February 1987 (1987-02-16) | 1 | |
| A | * abstract; figure * | 2-14 | |

-/--

The present search report has been drawn up for all claims

| Place of search | Date of completion of the search | Examiner |
|---|---|---|
| THE HAGUE | 20 November 2001 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

14

**European Patent Office**

## EUROPEAN SEARCH REPORT

Application Number

EP 01 40 0993

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 004, no. 062 (P-010), 9 May 1980 (1980-05-09) -& JP 55 032039 A (NIPPON TELEGR & TELEPH CORP), 6 March 1980 (1980-03-06) | 1 | |
| A | * abstract; figures * | 2-14 | |
| X | BOYSEL R M ET AL: "LINEAR TORSION-HINGED DEFORMABLE MIRROR DEVICE FOR OPTICAL SWSITCHING" OSA PROCEEDINGS ON PHOTONIC SWITCHING. SALT LAKE CITY, MAR. 1 - 3, 1989, PROCEEDINGS OF THE OSA TOPICAL MEETING, WASHINGTON, OSA, US, vol. 3, 1 March 1989 (1989-03-01), pages 132-137, XP000470938 ISBN: 1-55752-109-3 | 1 | |
| A | * figure 8 * | 2-14 | |
| A | FAGOTTI A ET AL: "APPLICATION AND EXPERIENCES OF AN OPTO-MECHANICAL SWITCH FOR MULTIMODE FIBRES" PROCEEDINGS OF MELECON '87, MEDITERRANEAN ELECTROTECHNICAL CONFERENCE, 34TH CONGRESS ON ELECTRONICS , 1987, pages 109-113, XP002183469 ITALY * figures 1-3 * | 1-14 | TECHNICAL FIELDS SEARCHED (Int.Cl.7) |
| A | US 5 226 104 A (KAPANY NARINDER S ET AL) 6 July 1993 (1993-07-06) * abstract; figures 1,2 * | 1-4 | |

-/--

The present search report has been drawn up for all claims

| Place of search | Date of completion of the search | Examiner |
|---|---|---|
| THE HAGUE | 20 November 2001 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................
& : member of the same patent family, corresponding document

EPO FORM 1503 03.82 (P04C01)

European Patent Office

# EUROPEAN SEARCH REPORT

Application Number

EP 01 40 0993

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 004, no. 015 (E-170), 5 February 1980 (1980-02-05) -& JP 54 156551 A (NIPPON TELEGR & TELEPH CORP), 10 December 1979 (1979-12-10) * abstract; figures * | 1-4 | |
| A | US 5 900 983 A (GOOSSEN KEITH WAYNE ET AL) 4 May 1999 (1999-05-04) * abstract; figures * | 1-4 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 20 November 2001 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 40 0993

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2001

| Patent document cited in search report | | Publication date | Patent family member(s) | | Publication date |
|---|---|---|---|---|---|
| DE 29618818 | U | 12-12-1996 | DE | 29618818 U1 | 12-12-1996 |
| EP 0550017 | A | 07-07-1993 | US | 5199088 A | 30-03-1993 |
| | | | CA | 2086158 A1 | 01-07-1993 |
| | | | DE | 69223227 D1 | 02-01-1998 |
| | | | DE | 69223227 T2 | 14-05-1998 |
| | | | EP | 0550017 A2 | 07-07-1993 |
| | | | JP | 3184653 B2 | 09-07-2001 |
| | | | JP | 5341213 A | 24-12-1993 |
| US 6031946 | A | 29-02-2000 | NONE | | |
| EP 0420468 | A | 03-04-1991 | AU | 6256890 A | 28-03-1991 |
| | | | CA | 2025167 A1 | 26-03-1991 |
| | | | EP | 0420468 A2 | 03-04-1991 |
| | | | JP | 3131816 A | 05-06-1991 |
| JP 2000019434 | A | 21-01-2000 | NONE | | |
| JP 62035322 4 | A | | NONE | | |
| JP 55032039 4 | A | | NONE | | |
| US 5226104 | A | 06-07-1993 | NONE | | |
| JP 54156551 4 | A | | NONE | | |
| US 5900983 | A | 04-05-1999 | NONE | | |

EPO FORM P0459

For more details about this annex : see Official Journal of the European Patent Office, No. 12/82